# EUROPEAN PATENT SPECIFICATION

(11) **EP 3 554 677 B1**
(45) Date of publication and mention of the grant of the patent: **22.09.2021**
(21) Application number: 17913110.7
(22) Date of filing: 14.12.2017
(51) Int. Cl.: B01F 3/04, B01F 5/06, F01N 3/28

(54) **MULTI-STAGE MIXER**
MEHRSTUFIGER MISCHER
MÉLANGEUR À PLUSIEURS ÉTAGES

(30) Priority: 15.12.2016 TR 201618641
(43) Date of publication of application: 23.10.2019
(73) Proprietor: FORD OTOMOTIV SANAYI ANONIM SIRKETI, Istanbul (TR)
(72) Inventor: SAVCI, Ismail Hakki, 34885 Sancaktepe/Istanbul (TR); AYYILDIZ, Aydin, 41670 Kocaeli (TR)
(74) Representative: Dericioglu, E. Korhan
(86) International application number: PCT/TR2017/050665
(87) International publication number: WO 2019/009841

(56) References cited:
- US-A1- 2010 083 643
- US-A1- 2016 024 985

## Description

### Technical Field

The present invention relates to a multi-stage mixer placed in a pipe found in an exhaust system for mixing the exhaust and urea flow in three stages so as to convert the same into a non-uniform flow structure that proceeds in both swirling and unsteady manner with swirl flow and cross-flow characteristics.

### State of the Art

In internal combustion engines, some exhaust gases are formed after combustion. Within the exhaust gases formed as a result of combustion, gases harmful for the environment and human health are also found. It is illegal and dangerous to discharge gases harmful for the environment and human health, directly from vehicle exhaust pipes. Harmful gases formed as a result of combustion are eliminated through certain stages such as filtering, re-combusting, and improving combustion process etc. This prevents discharging harmful gases directly from the exhaust system and reduces emission values.

Some embodiments are available to improve the combustion function and to improve the combustion quality in order to reduce the exhaust emission values. In some of these embodiments, air is introduced into the exhaust system to increase the amount of oxygen and improve the combustion quality. In recent years, various catalysts (reducing gases and/or liquids) are injected into the exhaust system in order to reduce emission values, especially for heavy commercial vehicles. The most commonly used liquid catalyst is urea. Injected gases and liquids must be homogeneously mixed with the exhaust gas so that they can react effectively with the exhaust gas. If sufficient and effective mixing cannot be achieved, some of the reducing liquids and gases are discharged before they can enter the chemical reaction. It is of great importance that the reducing liquids injected into the exhaust system are mixed in a balanced and proper way. Moreover, the injected liquids need to be disintegrated before they reach the catalyst found in the exhaust. In the exhaust system, mixers are used in order to mix and disintegrate such reducing liquids. Said mixers are generally called as urea mixers. The mixers used in the exhaust system directly affect the disintegration and mixing performance of the liquids sprayed into the exhaust system, and allows controlling the emission values of the gases discharged from the exhaust system. It is a critical technical detail and a significant technical problem that the mixer is required to mix urea and the exhaust gas very well in the system and disintegrate urea before it reaches the catalyst.

Nowadays, various mixers with different technical characteristics and different structures are used in heavy commercial vehicles. Many of said state of the art mixers have simple structures and cannot provide sufficient mixing due to their structures. Mixers that are used in the state of the art and have complex structures are not preferred due to their adverse effects on the system pressure and the accumulation of liquid crystals thereon. Urea is a reducer with a crystallisable structure and it can crystallize and accumulate in the exhaust system as long as it is not mixed well with the exhaust gas. Urea is sprayed into the exhaust system and enters into a hydrolysis and thermolysis reaction with the exhaust gas and ammonia is formed as a result of said reaction. Thus, the particles found in the exhaust gas are reduced by the urea reaction. The said urea reaction takes place really slow. It is of great importance to extend the reaction time to ensure that the chemical reaction takes place efficiently. With the patent according to the present application, the exhaust gas is allowed to flow in different flow characteristics so that the available reaction time can be extended for the urea reaction. With the patent according to the present application, the time period available for urea reaction is extended by maintaining the exhaust flow in an intensely unsteady flow characteristic by means of a cross-flow structure.

The mixers used in exhaust systems are required not to cause pressure loss in the system while ensuring disintegration of liquid droplets in the most efficient way. In order for the mixer to efficiently disintegrate the reducing liquids such as urea, the mixer is required to form the flow of the exhaust gas in different characteristics. For the mixer to operate at maximum efficiency, it is of great importance that it converts the exhaust flow into non-uniform flow, swirl flow, and cross-flow. Mixers used in the state of the art cannot provide sufficient mixing since they only form a single flow structure. The patent according to the present application provides maximum level of mixing by converting the exhaust gas flow into non-uniform flow, swirl flow, and cross-flow. With the patent according to the present application, it is aimed to disintegrate the reducing liquid (urea) before it reaches the catalysts. Thus, accumulation of crystals originating from urea is avoided on the catalyst. With the patent according to the present application, it is aimed that there is no change in the chemical structure of the reducing liquid while it can perform its catalyst function completely. In this way, it is ensured that urea can perform its function at the maximum level.

In US patent document No. US2016024985 (A1) encountered in the known status of the art, system and method for gas/liquid mixing in an exhaust after treatment system is described. Since said patent document relates to exhaust treatment systems and, more specifically, to exhaust treatment systems for internal combustion engines and vehicles incorporating the same. An exhaust treatment system for an internal combustion engine having improved mixing of an injected fluid comprises an exhaust gas conduit configured to receive exhaust gas from an internal combustion engine and to deliver the exhaust gas to the exhaust treatment system. A fluid injector in fluid communication with the exhaust gas conduit configured delivers a fluid into the exhaust gas and an evaporation volume disposed in the exhaust conduit downstream of the fluid injector is configured to slow the bulk velocity of the fluid and exhaust gas mixture to thereby increase the residence time of the exhaust gas mixture therein. An exhaust treatment device is configured to receive the fluid and exhaust gas mixture.

In US patent document No. US2010083643 (A1) encountered in the known status of the art, exhaust gas purification apparatus for internal combustion engine are disclosed. There is provided an exhaust gas purification apparatus for an internal combustion engine which can make the exhaust gas in which a reducing agent is diffused uniformly over the entirety flow into an NOx catalyst disposed on the downstream side. An exhaust gas purification apparatus for an internal combustion engine including an NOx catalyst disposed in an exhaust gas passage of an internal combustion engine, and a reducing agent injecting unit for injecting a reducing agent into the exhaust gas passage that is on an upstream side of the NOx catalyst, is characterized in that a narrowed portion in which the cross-sectional area of a flow passage is smaller than the cross-sectional area of the exhaust gas passage and that of the NOx catalyst is provided on a downstream side of an injecting position by the reducing agent injecting unit and the upstream side of the NOx catalyst, and that reducing agent diffusing means is provided on the narrowed portion.

In US patent document No. US8745978 encountered in the known status of the art, a mixer device developed for mixing exhaust gases with urea is described. Thanks to this mixer placed in the pipe, it is aimed to mix urea and exhaust gases properly. Since said patent document relates to the use before the injection system, the probability of urea accumulation is quite low. The technical problem solved by the patent according to the present application is quite different. With the patent according to the present application, it is aimed to solve the urea accumulation problem encountered after the injection system. With the patent according to the present application, it is aimed to sweep the micron-scale droplets that accumulate after the injection system by means of the flow of exhaust gas and urea. For this purpose, it is ensured that the exhaust gas flow advance in an angle that allows sweeping so that the droplets that would cause crystallization are removed by sweeping.

In US patent document No. US8347606 encountered in the known status of the art, a system and a method developed for use in exhaust gas systems in internal combustion engines are disclosed. By means of said system, the performance of the internal combustion engine is controlled. According to the engine parameters, control of the mixing device found in the system is ensured. In the said document, in order to avoid the problem of crystallization, melting is ensured by increasing the temperature of the exhaust gas. However, in the patent according to the present application, the problem of crystallization is solved by sweeping by means of exhaust gas flow. In the patent according to the present application, maximum level of mixing is ensured by a mixer positioned after the injection, which converts the exhaust gas flow into non-uniform flow, swirl flow, and cross-flow, and at the same time urea droplets are swept away.

In US patent document No. US20100107617 encountered in the known status of the art, a mixer is disclosed, in which vanes of more than one angle and type are used. In the said patent document, sufficient technical detail is not found about the kind of flow that is provided. However, in the patent according to the present application, the uniform swirl flow structure of the exhaust gas is converted into an unsteady flow structure, and thanks to this flow structure of the exhaust gas, time is gained for its reaction with urea.

In US Patent Document No. US8459017 encountered in the known status of the art, a mixer developed for use in exhaust systems of internal combustion engines is disclosed. In the patent according to the present application, mixing operation is performed in an efficient manner by passing the exhaust gas through a three-stage mixer where it is converted into unsteady flow structure, and at the same time a sweeping operation is performed so as to prevent accumulation of urea droplets.

In various patent documents encountered in the known status of the art, the exhaust flow is converted into a rotating flow in the form of a swirl and urea also makes the same rotational motion within this flow. The main purpose of converting the gas flow into a swirl flow structure is to extend the reaction time with urea by extending the flow path. However, the rotating/swirl flow structure alone is not sufficient for the chemical reaction. In the patent according to the present application, the swirl structure of the gas flow alone is not a preferred situation. In the patent according to the present application, the flow of the exhaust gas is transformed into an unsteady structure and at the same time it advances while rotating/swirling. The non-uniform flow structure of the exhaust gas ensures the ideal flow and reaction environment for chemical reaction. Thus, the gas flow and urea proceed in an unsteady and swirling manner, providing the unsteady and swirl flow required for efficient chemical reaction. In urea mixers, urea hits onto the mixer and starts to accumulate on the mixer in time, and can even cause complete clogging of the exhaust pipe. In the patent according to the present application, urea hits onto the multi-stage mixer in the same way. However, due to the exhaust gas flow characteristic, after urea hits onto the mixer, it is swept away from the surface and it is prevented from accumulating on the mixer surface.

The patent according to the present application is used in the exhaust system of internal combustion engines, preferably after the injector, and converts the exhaust gas flow into an unsteady flow structure. In the patent according to the present application, mixing operation is performed in three stages in a compact mixer. At each stage a different flow characteristic is provided for the gas flow.

### Purposes of the Invention

The purpose of the present invention is to develop a multi-stage mixer for use in exhaust systems of internal combustion engines in order to ensure that the reducing liquid (urea etc.) sprayed into the exhaust system is completely disintegrated before reaching the catalysts.

Another purpose of the invention is to develop a multi-stage mixer which ensures maximum level of mixing by converting the exhaust gas flow into non-uniform flow, swirl flow, and cross-flow.

Another purpose of the present invention is to develop a multi-stage mixer which extends the flow path of the exhaust gas and urea so as to gain more time for chemical reaction and change.

Another purpose of the present invention is to extend the reaction time for urea by ensuring that the exhaust flow remains intensely in unsteady flow characteristic by means of a cross-flow structure.

### Brief Description of the Invention

The multi-stage mixer developed in order to achieve the purposes of the present invention and defined in claim 1 and the other claims dependent to claim 1, ensures disintegration of urea before reaching the catalyst. The multi-stage mixer performs mixing operation in three stages. In the first stage mixing process, the flow is rotated by passing through a conical piece and ensured that it flows in a swirling manner. The first stage mixer has a circular or conical structure. The plates on the first mixer are positioned such that there would be a distance between thereof and a circle would form when they come together. By means of said plates and the conical structure of the first mixer, a swirl-shaped flow is obtained.

The second stage mixer and the third stage mixer are positioned as one within the other. The flow centralizer used in the second stage both accelerates the flow and directs the same towards the pipe center. The flow incoming to the flow centralizer is directed to the center with the same flow characteristic via the channeler outer vanes. The structure found within the flow centralizer provides the third stage mixing and forming cross-flow. Vanes are found within the cross-flow generator. The vanes have opposite angles with regard to each other. For example, while the vanes found at the middle section are positioned facing upwards, the side vanes found just beside the middle vanes are positioned facing downwards. In this way, the flow hitting onto said vanes is transformed into cross-flow.

In order for urea to be disintegrated before reaching the catalysts, the outer vanes accelerate the exhaust gas and channel the same towards the flow coming from the inner vanes. In this way, unsteady flow structure is formed due to the crash of flows coming from two different paths and the liquid is disintegrated. In order to avoid urea accumulation on the vanes, the outer vanes (channeler) blow air onto the inner vanes (middle and side vanes) so as to disperse the particles accumulating thereon and thus prevents crystallization.

In the mixer according to the present application, cross-flow is formed due to the design of the inner vanes, the path of the exhaust gas and urea is extended at the outer vanes together with the incoming unsteady flow (from the channeler), and thus time is gained for chemical change.

### Detailed Description of the Invention

The multi-stage mixer developed in order to achieve the purposes of the present invention is shown in the attached figures, among which:
- Figure 1.: is a perspective view of the multi-stage mixer positioned within the exhaust pipe.

- Figure 2.: is a different angle perspective view of the multi-stage mixer positioned within the exhaust pipe.
- Figure 3.: is a perspective view of the passage of urea through the multi-stage mixer.
- Figure 4.: is a view of the passage of the exhaust gas through the multi-stage mixer.
- Figure 5.: is a perspective view showing formation of a swirl while the exhaust gas passes through the conical mixer and formation of the reverse swirl flow.
- Figure 6.: is a perspective view showing the channelling of the flow, incoming in the form of a reverse swirl, towards the center by means of the flow centralizer.
- Figure 7.: is a perspective view showing the conversion of the flow reaching the cross-flow generator in the form of a reverse swirl into a cross-flow.
- Figure 8.: is a perspective view partially showing the conversion of the flow reaching the cross-flow generator in the form of a reverse swirl into a cross-flow.
- Figure 9.: is a sectional view of the flow centralizer and the cross-flow generator.
- Figure 10.: is a perspective view of the flow centralizer and the cross-flow generator.
- Figure 11.: is a perspective view of the flow centralizer and the cross-flow generator.
- Figure 12.: is a perspective view of the cross-flow generator.
- Figure 13.: is a perspective view of the connecting plate, panel, middle vane, and side vanes found in the cross-flow generator.
- Figure 14.: is a view of the non-uniform flow structure, cross-flow characteristic, swirl or reverse swirl flow characteristic.
- Figure 15.: is a perspective view of the swirl generator.

The components given in the figures are enumerated individually, and the meanings of these numbers are given below.
**1.** Multi-stage mixer
**2.** Swirl generator
   **21.** Swirl plate
   **22.** Outer conical structure
   **23.** Inner conical structure
**3.** Flow centralizer
   **31.** Outer frame
   **32.** Channeler
   **33.** Gap
   **34.** Channel
**4.** Cross-flow generator
   **41.** Frame
   **42.** Connecting plate
      **421.** Panel
      **422.** Connecting terminal
   **43.** Middle vane
   **44.** Side vane
   **45.** Middle vane gap
   **46.** Side vane gap
**5.** Connecting piece
   **B.** Pipe
   **U.** Urea
   **G.** Swirl or reverse swirl flow characteristic
   **C.** Cross-flow characteristic
   **D.** Non-uniform flow structure

In internal combustion engines, the gas formed due to combustion (combustion gas) is drawn by the exhaust manifold and discharged from the vehicle by the exhaust system. The emission values of the combustion gases are reduced before they are discharged. The multi-stage mixer (1) is positioned in the exhaust system preferably at a position before the injection. The multi-stage mixer (1) is either placed in the exhaust pipe (B) or produced in an integrated manner with the exhaust pipe (B). The multi-stage mixer (1) according to the invention ensures that urea (U) and similar reducers used to reduce exhaust emission values enter into a more efficient reaction with the exhaust gas. The multi-stage mixer (1) mixes the exhaust gas and urea (U) at different flow characteristics. It is ensured that the exhaust gas passing through the multi-stage mixer (1) initially forms a swirl flow and then forms a cross-flow characteristic (C) with an unsteady (non-uniform) structure. In this way, the path of the exhaust gas is extended and it is allowed to react with urea (U) for a longer period of time, and at the same time, non-uniform (turbulent) flow structure (D), in which the chemical reaction is most effective, is realized.

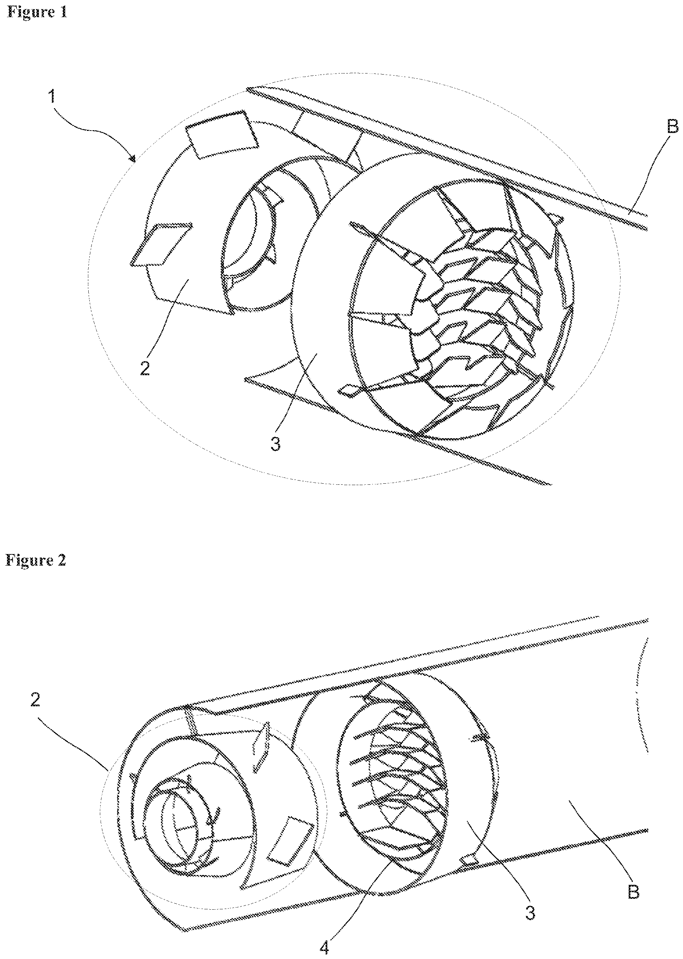

The multi-stage mixer (1) mixes the exhaust gas and urea (U) in three stages. The mixing operation is performed in three sequential stages having three different structures. In this embodiment of the invention, the multi-stage mixer (1) comprises at least one swirl generator (2), at least one flow centralizer (3), and at least one cross-flow generator (4). The exhaust gas and urea (U) initially pass through the swirl generator (2) to form a swirl flow structure, and then the exhaust gas in swirl flow passes through the flow centralizer (3) and the cross-flow generator (4) found in the flow centralizer (3). The exhaust gas in swirl flow is guided towards the center of the pipe (B) by the flow centralizer (3), and at the same time, the exhaust gas passing through the cross-flow generator (4) advances through the pipe with a cross-flow characteristic (C) (Figures 1-4).

In a disclosed embodiment not forming part of the invention, the multi-stage mixer (1) only comprises the flow centralizer (3) and the cross-flow generator (4) found in the flow centralizer (3). In this disclosed embodiment, the exhaust gas initially contacts the flow centralizer (3) in the multi-stage mixer (1). The exhaust gas reaching the flow centralizer (3) may have a normal flow characteristic or a swirl or reverse swirl flow characteristic (G) given by a different structure.

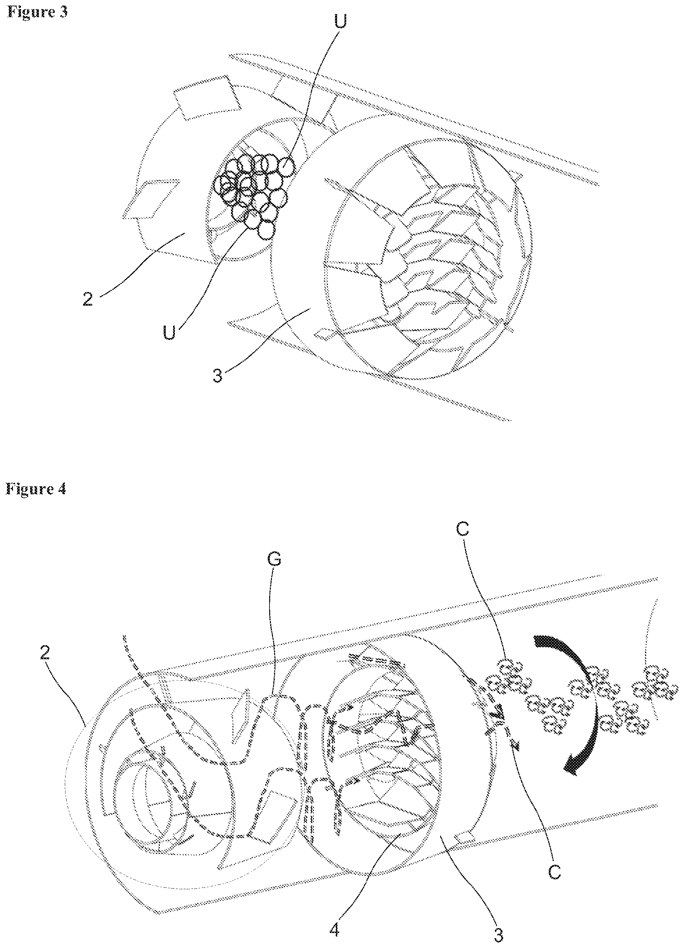

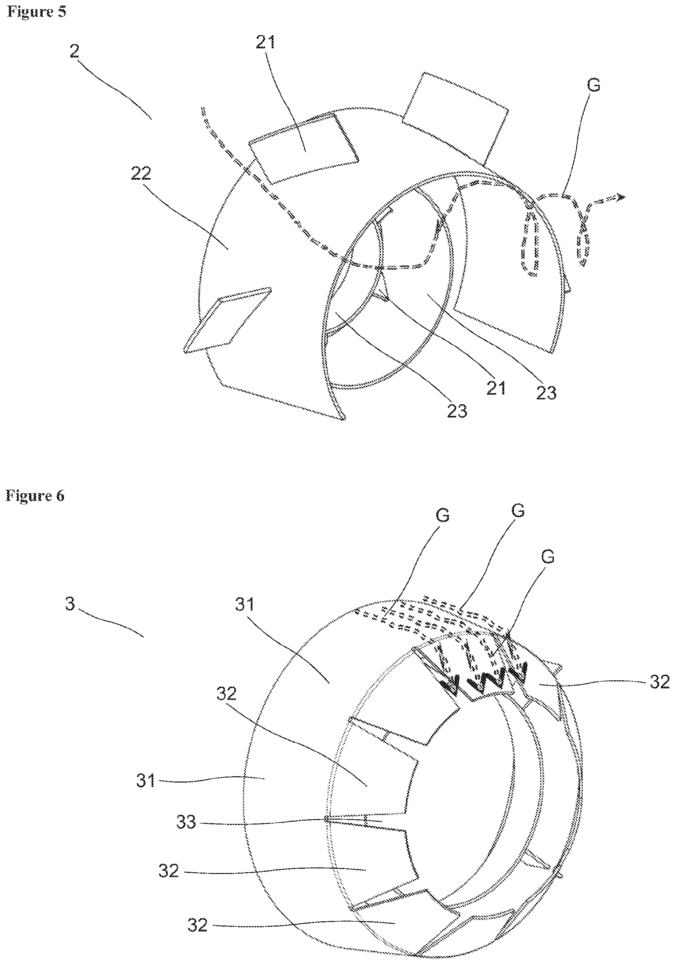

The swirl generator (2) comprises at least one swirl plate (21). The swirl generator (2) is found before the flow centralizer (3) and the cross-flow generator (4). The exhaust gas reaching the multi-stage mixer (1) initially passes through the swirl generator (2). The swirl generator (2) has a conical or circular shape and a hollow structure. The swirl generator (2) has a hollow structure which preferably narrows down inwards from the outer surface, or in other words, from the exhaust gas incoming direction towards the tip part (Figures 1-4). The narrowing structure of the swirl generator (2) allows the exhaust gas passing through to accelerate. Swirl plates (21) are found on the outer surface of the swirl generator (2), and are preferably positioned in different angles with regard to each other. The swirl plates (21) are preferably positioned in an interspaced manner and they form a circular structure with each other. Thanks to the circular angular position of each swirl plate (21) with respect to each other, the exhaust gas passing through the outer surface of the swirl generator (2) is allowed to swirl while advancing. Thus, the exhaust gas passing through the swirl generator (2) is allowed to acquire a rotating/swirling motion (Figure 5). Depending on the relative positions of the swirl plates (21) with regard to each other, the rotational motion of the exhaust gas can be in clockwise or counter-clockwise direction. Thanks to the swirl generator (2), the exhaust gas is allowed to flow in the form of a swirl or a reverse swirl. Since urea (U) or any other reductant is found in the exhaust gas flowing towards the swirl generator (2), urea (U) also leaves the swirl generator (2) together with the exhaust gas in the same flow pattern, or in other words, with a swirl or reverse swirl flow characteristic (G) (Figure 4, Figure 5).

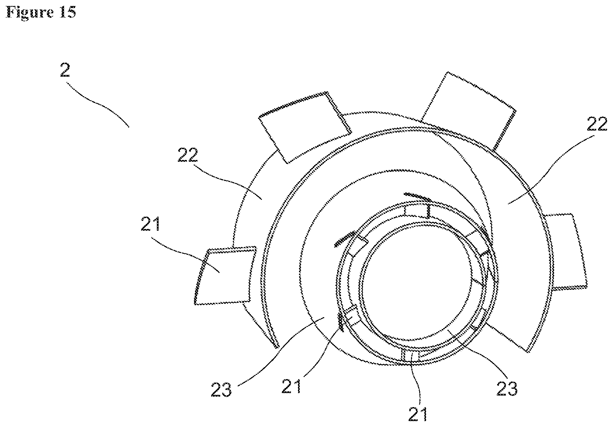

In an embodiment of the invention, the swirl generator (2) comprises at least one outer conical structure (22), at least one inner conical structure (23) found within the outer conical structure (22), and swirl plates (21) found outside the outer conical structure (22) and the inner conical structure (23) (Figure 15). The swirl generator (2) consists of the outer conical structure (22) and the inner conical structure (23) which are found as one within the other. Swirl plates (21) are found on the outer conical structure (22) and the inner conical structure (23). The swirl plates (21) are preferably positioned in an interspaced manner and they form a circular structure with each other. The exhaust gas and urea (U) mixture hitting on the swirl plates (21) rotate in a circular manner. While the swirl plates (21) found on the outer conical structure (22) and inner conical structure (23) can be positioned such that they can form a circular flow in the same direction, the swirl plates (21) found on the outer conical structure (22) and the inner conical structure (23) can also be positioned such that they can form a circular flow in opposite direction to each other. It provides rotating flow pattern separately to the inner side and the outer side of the exhaust gas and urea (U) flow hitting onto the swirl generator (2) so as to provide a swirl or reverse swirl flow characteristic (G).

There can be more than one inner conical structure (23) present. In an embodiment of the invention, another inner conical structure (23) is found in the inner conical structure (23) (Figure 15). The swirl generator (2) provides swirl flow to the exhaust gas and urea (U) separately, by means of the outer conical structure (22) found at the outermost side and the inner conical structures (23) found therein.

In an embodiment of the invention, the outer conical structure (22) and the inner conical structure (23) are connected to each other by means of a connecting piece (5). The connecting piece holds the outer conical structure (22) and the inner conical structure (23) together and can preferably fix thereof onto the pipe (B) inner surface.

In an embodiment of the invention, the swirl generator (2) is fixed to the cross-flow generator (4) such that they would have a distance in between. In this way, the swirl generator (2) and the cross-flow generator (4) become a single integrated structure.

Following the swirl generator (2), or in other words in the flow direction of the exhaust gas, the flow centralizer (3) and the cross-flow generator (4) found in the flow centralizer (3) are found after the swirl generator (2). The exhaust gas exiting the swirl generator (2) enters the flow centralizer (3) in a swirl or reverse swirl flow characteristic (G). The flow centralizer (3) comprises at least one outer frame (31), a channeler (32), a gap (33) and at least one channel (34) (Figures 6-7). The outer frame (31) forms the outer structure and body of the flow centralizer (3). The outer frame (31) preferably has a hollow circular structure. While the outer frame (31) can have the same diameter from the outermost edge to the innermost edge thereof, it can also have a narrowing diameter from the outermost edge to the innermost edge thereof. The exhaust gas and urea (U) flow from the back to the front of the outer frame (31). The exhaust gas and urea (U) first hit at the back side of the outer frame (31) and then move towards the front side of the outer frame (31). Channelers (32) are found at the front side of the outer frame (31), or in other words, at the part from where the exhaust gas and urea (U) exit. The channelers (32) start from the edge of the outer frame (31) and extend towards the center of the outer frame (31). The channelers (32) preferably have a straight structure which narrows down from the upper part towards the tip. Gaps (33) are found between the channelers (32). Gaps (33) are found at both sides of each channeler (32), at the right and left sides thereof. The gaps (33) have a narrower structure at the edge of the outer frame (31) and a broader structure at the channeler (32) tips which are closer to the center. Channels (34) are found on the outer frame (31). The channels (34) form an empty space on outer frame (31). The connecting plate (42) and/or the connecting piece (5) enter into said channels (34). By means of the channels (34), the cross-flow generator (4) is connected to the flow centralizer (3) and integrated with the flow centralizer (3). The number of channels found on the outer frame (31) is equal to the number of the connecting pieces (5) and/or connecting plates (42) to be connected thereon.

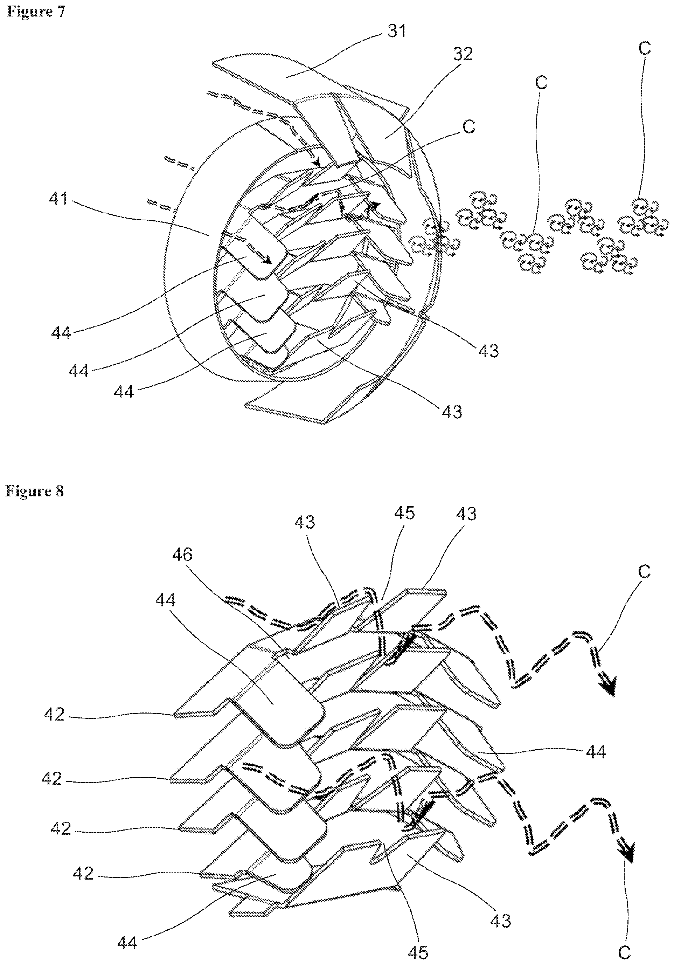

When the exhaust gas and urea (U) reach the flow centralizer (3), they are channelled/guided towards the center of the outer frame (31) and the pipe (B) by means of the channelers (32) found at the edge of the outer frame (31). The exhaust gas and urea (U) flowing over or through the outer frame (31) hits onto the channeler (32), follows the end/tip structure of the channeler (32) directed towards the center, and thus it is channelled towards the pipe (B) center (Figure 7). The flow centralizer (3) channels the flow towards the center from the upper side of the outer frame (31) and between the outer frame (31) and the cross-flow generator (4) frame (41) (Figure 4). Since the channelers (32) are positioned in an angular manner from the upper side of the outer frame (31) towards the center, they both channel the flow and at the same time accelerate the flow. In this way, the exhaust gas and urea (U) entering the flow centralizer (3) is channelled towards the center as well as going quickly towards the inner part.

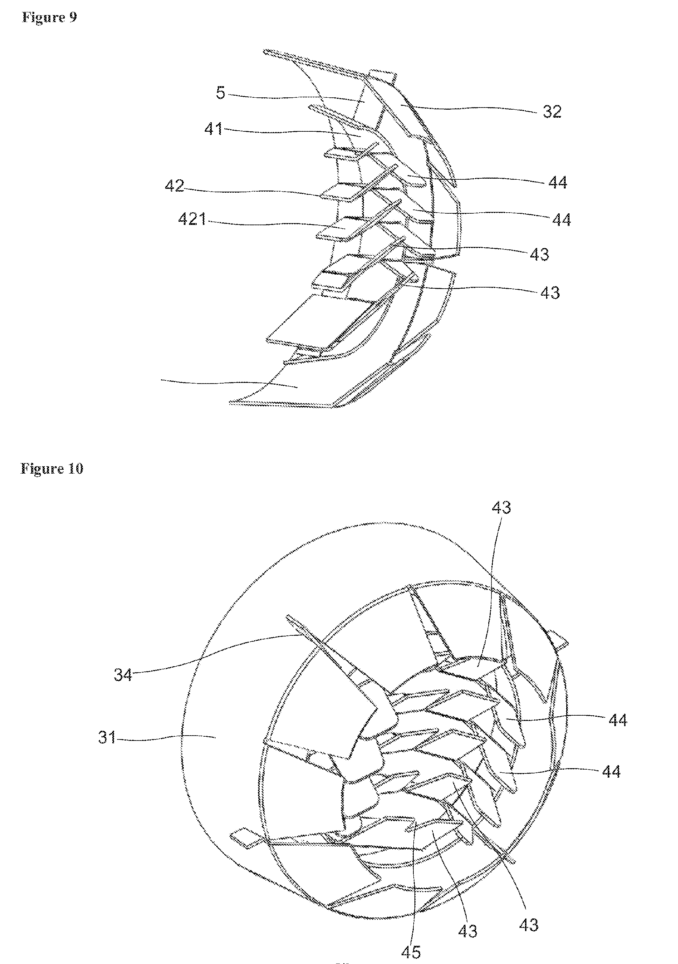

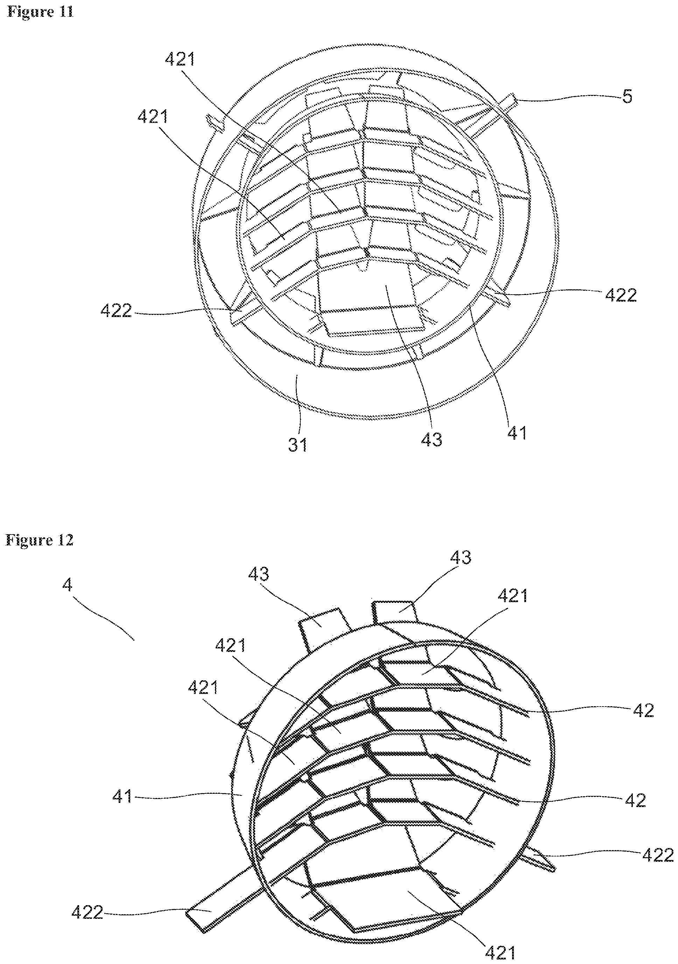

At the inner part of the flow centralizer (3), preferably the cross-flow generator (4) is found in fixed state to the outer frame (31). The cross-flow generator (4) preferably comprises at least one frame (41), at least one connecting plate (42), a middle vane (43), a side vane (44), a middle vane gap (45), and a side vane gap (46) (Figure 6, Figure 8, Figure 9). A frame (41) is found at the outer part of the cross-flow generator (4). The frame (41) has a circular and hollow structure. The diameter of the frame (41) is smaller than the diameter of the outer frame (31) and it is mounted into the outer frame (31) (Figure 11). The frame (41) and the outer frame (31) are concentric and are found on the same direction and same flow line. The cross-flow generator (4) is mounted into the flow centralizer (3) and ensures formation of cross-flow at the inner part of the flow centralizer (3) and advancement of the flow with a cross-flow characteristic (C) (Figure 4, Figure 7, Figure 8).

Connecting plates (42) connected to the frame (41) are found within the cross-flow generator (4) frame (41) (Figure 8, Figure 9, Figure 11). The connecting plates (42) are positioned at preferred intervals from the lowermost part to the uppermost part of the frame (41) such that they would be parallel to each other. A certain distance is preferably found between the connecting plates (42). The connecting plate (42) extends from one inner wall to the other inner wall of the frame (41) (Figure 11). The connecting plate (42) may have a linear, circular, or angular multi-stage structure.

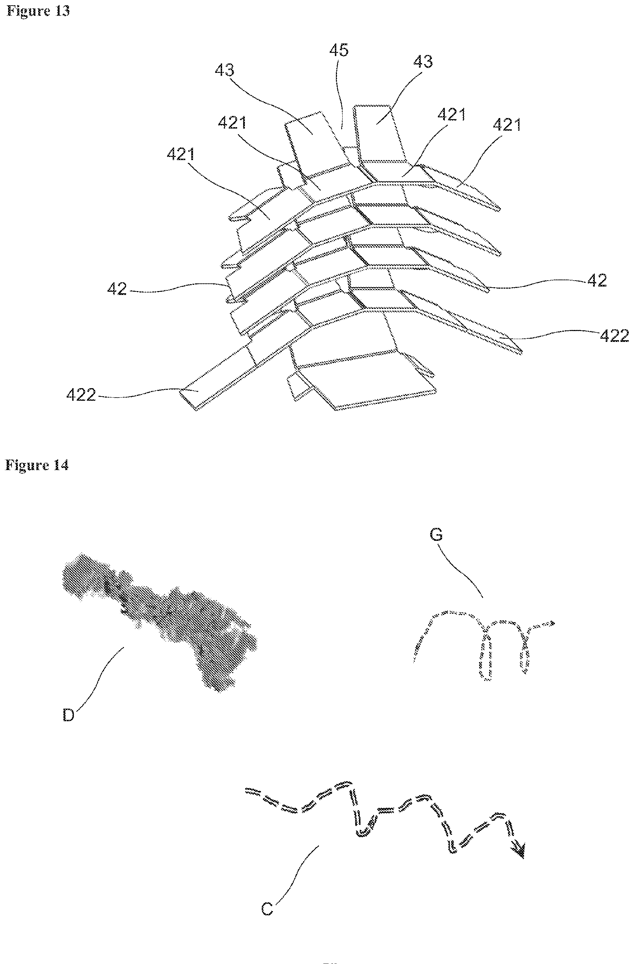

In an embodiment of the invention, the connecting plate (42) comprises at least one panel (421) and at least one connecting terminal (422). The panels (421) are connected to each other or brought together to form the connecting plate (42) (Figure 13). The connecting plate (42) preferably consists of more than one panel (421). The panels (421) are preferably brought together at different angles relative to one another. In this way, a connecting plate (42) having different heights within the frame (41) and extending from one end to the other end of the frame (41) is obtained (Figure 13). Side panels (421) are found at the edges of the connecting plate (42) that are closer to the frame (41), and middle panels (421) are found at the middle section thereof. In an embodiment of the invention, the height of the middle panels (421) with regard to the lower point of the frame is more than the height of the side panels (421).

In an embodiment of the invention, a middle vane (43) and a side vane (44) are found at the front edge part of the connecting plate (42). The middle vane (43) and the side vane (44) are preferably connected to the panels (421) or they have a single piece structure together with the panel (421). Side vanes (44) are found at the side panels (421) and middle vanes (43) are found at the middle panels (421) of the connecting plate (42). Middle vanes (44) are preferably found at the middle part of the connecting plate (42) with regard to the center of the frame (41). Side vanes (44) are found at the edges of the connecting plate (42) that are closer to the frame (41) (Figure 13).

In an embodiment of the invention, a middle vane gap (45) is found between the middle vanes (43), through which the exhaust gas and urea (U) flow can pass. Between both middle vanes (43), preferably at least one middle vane gap (45) is found. The middle vane gap (45) provides space for the exhaust gas flow between the middle vanes (43) (Figure 8, Figure 13).

In an embodiment of the invention, a side vane gap (46) is found between the side vanes (44), through which the exhaust gas and urea (U) flow can pass. Between both side vanes (44), preferably at least one side vane gap (46) is found. The side vane gap (46) provides space for the exhaust gas flow between the side vanes (44) (Figure 8, Figure 13).

In an embodiment of the invention, the middle vanes (43) and side vanes (44) are positioned opposite to each other. The middle vanes (43) are positioned in an angular manner such that they would face upwards or downwards from the edge of the panel (421) on which they are found. The middle vanes (43) are positioned such that they would face upwards or downwards preferably with a 20-70° angle with the panel (421) or the connecting plate (42).

In an embodiment of the invention, the side vanes (44) are positioned in an angular manner such that they would face upwards or downwards from the edge of the panel (421) on which they are found. The side vanes (44) are positioned such that they would face upwards or downwards preferably with a 20-70° angle with the panel (421) or the connecting plate (42).

In a preferred embodiment of the invention, the middle vanes (43) and the side vanes (44) are positioned in opposite direction with regard to each other. If the middle vane (43) is positioned such that it would face upwards from the panel (421), then the side vanes (44) are positioned at the opposite direction, or in other words, they are positioned in a reverse angle such that they would face downwards from the panel (421).

Thanks to the opposite (reverse) and reverse-angled position of the middle vanes (43) and side vanes (44), the exhaust gas and urea (U) are allowed to proceed by forming a cross-flow structure. When the exhaust gas is considered in micro scale, formation of the cross-flow will be understood better. The exhaust gas and urea (U) reaching the middle vanes (43) and side vanes (44) are channelled in said directions by means of the upward- and downward-facing structures of the middle vanes (43) and the side vanes (44), and a flow having the cross-flow characteristic (C) is obtained with this motion. The flow coming out of the cross-flow generator (4) comes out by gaining a cross-flow characteristic (C).

In an embodiment of the invention, the cross-flow generator (4) is fixed to the flow centralizer (3) by means of the connecting plate (42) and/or connecting piece (5). The connecting terminals (422) found at the outermost ends of the connecting plate (42) preferably pass through the frame (41) and enters into the channels (34) found on the outer frame (31), and thus ensures fixing of the cross-flow generator (4) to the flow centralizer (3). Moreover, the connecting pieces (5) connect the cross-flow generator (4) frame (41) and the outer frame (31) with each other (Figure 11).

In an embodiment of the invention, the cross-flow generator (4) is fixed to the flow centralizer (3) at the middle section of the flow centralizer (3) by means of the connecting pieces (5) and/or the connecting plate (42) such that space would be left in between thereof. By changing the size of the connecting terminal (422) and/or connecting plate (42) found at the end of the connecting pieces (5), the distance between the flow centralizer (3) and the cross-flow generator (4) can be changed. A gap with a preferred distance and width can be left between the flow centralizer (3) and the cross-flow generator (4). The gap between the flow centralizer (3) and the cross-flow generator (4), or in other words, the gap between the outer frame (31) and the frame (41) allows the flow passing through that area to exit as it is. The gas and urea (U) flow passing over the outer frame (31) is only channelled towards the center. Moreover, the gas and urea flow passing between the outer frame (31) and the frame (41) is also channelled towards the center in the same way. The flow passing over the outer frame (31) and between the outer frame (31) and the frame (41) has a swirl or reverse swirl flow characteristic (G). The flow coming out of these areas proceeds towards out of the multi-stage mixer (1) without changing its flow characteristic. In this way, by means of said areas, a flow with a swirl or reverse swirl flow characteristic (G) is obtained from the multi-stage mixer (1). Said swirl or reverse swirl flow characteristic (G) is combined with the flow coming out of the cross-flow generator (4) with a cross-flow characteristic (C), and thus a complex and non-uniform flow structure (D) comprising both swirl or reverse swirl flow characteristic (G) and cross-flow characteristic (C) is obtained.

The exhaust gas advancing within the exhaust pipe (B) and the urea (U) sprayed into the exhaust gas move together and enter into the swirl generator (2). The swirl generator (2) ensures that the flow is converted into a flow with a swirl or reverse swirl flow characteristic (G). Said swirl or reverse swirl flow characteristic (G) is shown in Figure 4 and Figure 5. Thanks to the swirl or reverse swirl flow characteristic (G) swirl generator (2), exhaust and urea (U) mixture is allowed to move travel more distance with swirl or reverse swirl flow characteristic (G), or in other words, the path of the flow is extended via rotation. The first mixing stage of the multi-stage mixer (1) is performed in swirl or reverse swirl flow characteristic (G) generator and a flow with a swirl or reverse swirl flow characteristic (G) is obtained.

The flow centralizer (3) provides the second mixing stage of the multi-stage mixer (1). In the second mixing stage, the flow reaching the flow centralizer (3) with a swirl or reverse swirl flow characteristic (G) is centralized and channelled towards the middle part of the pipe (B) and the multi-stage mixer (1). By means of the angular and center-facing structure of the flow centralizer (3) and the flow channelers (32) extending over the outer surface thereof, the flow passes over the channelers (32) and is channelled towards the center while being accelerated. The flow reaching the space between the flow regulator (3) outer frame (31) and frame (41) also passes below the channelers (32) in the same way and is also channelled towards the center while being accelerated. In the second stage of the multi-stage mixer (1), the flow is directed towards the center by means of the flow centralizer (3) and the flow having a swirl or reverse swirl flow characteristic (G) is maintained (Figure 6, Figure 7). The channelers (32) also blow the flow onto the middle vane (43) and side vanes (44) so as to sweep the surfaces of the middle vanes (43) and side vanes (44) and thus prevent crystallization of urea (U).

At the third stage of the multi-stage mixer (1), the flow with the swirl or reverse swirl flow characteristic (G) is transformed into a flow with a cross-flow characteristic (C) by means of the cross-flow generator (4). The flow incoming with the swirl or reverse swirl flow characteristic (G) is channelled such that it would make an angular and cross-flow pattern with the middle vanes (43) and side vanes (44) of the cross-flow generator (4), which are positioned opposite to each other. The flow hitting onto the middle vanes (43) and the side vanes (44) are channelled according to the angle of the middle vanes (43) and the side vanes (44) with regard to the connecting plate (42). The flow hitting onto the middle vanes (43) and side vanes (44) is channelled in opposite directions, upwards and downwards. The flow reaching the cross-flow generator (4) hits onto the middle vanes (43) and side vanes (44), is channelled in a cross-flow pattern and leaves the multi-stage mixer (1) in this pattern. A plurality of connecting plates (42) are found in the cross-flow generator (4) positioned in parallel to each other. Preferably more than one middle vanes (43) and side vanes (44) are found on each connecting plate (42). By means of the middle vanes (43) and side vanes (44) found in the frame (41) and positioned in different distances to the frame (41), cross-flow patterns can be obtained with various different levels and various different forms of dispersion. In this way, a non-uniform and unsteady flow intensity is obtained in intertwined cross-flow patterns that are mixed into each other and dispersed in different angles. The cross-flow generator (4) provides a mixed and non-uniform flow (D) structure at the exit of the multi-stage mixer (1) that is mixed in an intertwining manner in a cross-flow characteristic (C).

By means of the multi-stage mixer (1), the exhaust and urea (U) flow are ensured to have an unsteady structure/pattern. The flow exiting the multi-stage mixer (1) is converted into an unsteady, intertwined, complex structure crashing into each other, or in other words, a non-uniform flow structure (D). By means of the multi-stage mixer (1), both a swirling and unsteady flow characteristic is ensured and time and opportunity is gained for the urea (U) to enter into reaction during flow. With the multi-stage mixer (1), swirl and non-uniform flow structure (D) are provided together.

## Claims

1. A multi-stage mixer (1) for placing inside a vehicle exhaust pipe (B) found in an exhaust system for mixing the exhaust and urea (U) flow in three stages so as to convert the same into a non-uniform flow structure (D) that proceeds in both swirling and unsteady manner with swirl or reverse swirl flow characteristic (G) and cross-flow characteristic (C); and comprising
- at least one swirl generator (2) comprising swirl plates (21) configured to mix the exhaust gas and urea (U) flow in the first stage and positioned with regard to each other such that they would form a circular structure, and ensuring, by means of the swirl plates (21) and its circular hollow structure, conversion of the exhaust gas and urea (U) flow into a flow characteristic in the form of a swirl or reverse swirl flow characteristic (G) and allowing extension of the flow path via rotation,
- at least one flow centralizer (3) configured to perform the second mixing stage, and during the second mixing stage, configured to channel the flow incoming with swirl or reverse swirl flow characteristic (G) towards the central part of the pipe (B) by centering the flow by means of the channelers (32) found thereon,
- the flow centralizer (3) found in the flow direction of the exhaust gas, after the swirl generator (2), configured to center the flow leaving the swirl generator (2) with a swirl or reverse swirl flow characteristic (G), and comprising at least one outer frame (31),
at least one cross-flow generator (4) fixed in the flow centralizer (3) in a concentric manner with the flow centralizer (3), configured to perform the third mixing stage, comprising middle vanes (43), side vanes (44), and a connecting plate (42), and configured to channel the flow with swirl or reverse swirl flow characteristic (G) hitting onto the middle vanes (43) and side vanes (44), found at different distances and positions with regard to each other on the connecting plate (42), towards opposite directions to each other and thus converting the flow into a flow with a cross-flow characteristic (C),
**characterized in that** the flow centralizer (3) comprises a channeler (32), a gap (33), and at least one channel (34),
- gaps (33) found at the front part of the outer frame (31), at the section where the exhaust gas and urea (U) exit, at the channelers (32) which start from the edge part of the outer frame (31) and extend towards the center of the outer frame (31) and at both sides of the channelers (32), and which have a narrower structure at the edge of the outer frame (31) and a broader structure at the channeler (32) tips which are closer to the center.

2. A multi-stage mixer (1) according to claim 1, **characterized by** swirl plates (21) found on the outer conical structure (22) and the inner conical structure (23), positioned on the outer conical structure (22) and the inner conical structure (23) in the same direction to form a circular flow.

3. A multi-stage mixer (1) according to claim 1, **characterized by** swirl plates (21) positioned on the outer conical structure (22) and the inner conical structure (23) in opposite directions to each other to form reverse circular flows.

4. A multi-stage mixer (1) according to claim 1, **characterized by** channels (34) found on the outer frame (31) and allowing the cross-flow generator (4) and the flow centralizer (3) to connect to each other by forming an empty space on the outer frame (31) where the connecting plate (42) and a connecting piece (5) are to be inserted, and channelers (32) found on the flow centralizer (3) outer frame (31) and positioned in an angular manner from the upper part of the outer frame (31) towards the center such that they would channel the flow flowing over the upper part of the outer frame (31) and through the outer frame (31) and the cross-flow generator (4) frame (41) towards the center.

5. A multi-stage mixer (1) according to claim 1, **characterized by** the cross-flow generator (4) found in the flow centralizer (3) comprising at least one frame (41), at least one connecting plate (42), a middle vane (43), a side vane (44), a middle vane gap (45), and a side vane gap (46).

6. A multi-stage mixer (1) according to claim 5, **characterized by** the cross-flow generator (4) having a frame (41) found at the outermost part of the cross-flow generator (4), having a circular and hollow structure with a diameter that is smaller than the diameter of the outer frame (31), and mounted into the outer frame (31); and connecting plates (42) connected to the frame (41), positioned in parallel to each other in preferred intervals from the lowermost part to the uppermost part of the frame (41), and extending from one inner wall to the other inner wall of the frame (41).

7. A multi-stage mixer (1) according to claim 5, **characterized by** a connecting plate (42) comprising at least one panel (421) forming the connecting plate (42) by being connected to each other or by coming together, coming together at different angles with regard to each other and ensuring that the connecting plate (42) is found in the frame (41) at different heights extending from one end to the other end of the frame (41), and at least one connecting terminal (422).

8. A multi-stage mixer (1) according to claim 7, **characterized by** the cross-flow generator (4) having middle vanes (43) found at the middle part of the connecting plate (42) with regard to the frame (41) center, and side vanes (44) found at the connecting plate (42) edges that are closer to the frame (41), and both found at the front edge part of the connecting plate (42), connected to the panel (421) or having a single piece structure with the panel (421); and a middle vane gap (45) forming a space between the middle vanes (43) through which the exhaust gas and urea (U) flow can pass, and a side vane gap (46) forming a space between the side vanes (44) through which the exhaust gas and urea (U) flow can pass.

9. A multi-stage mixer (1) according to claim 7, **characterized by** the cross-flow generator (4) having middle vanes (43) and side vanes (44) configured to channel the exhaust gas and urea (U) hitting thereon in directions according to their own angle of stance by means of their opposite- and reserve-angled positions with regard to each other, and thus configured to provide a cross-flow pattern to the flow; the middle vanes (43) being positioned in an opposite manner with regard to the side vanes (44), and positioned such that they would face upwards or downwards from the edge of the panel (421) on which they are found and preferably make an angle of 20-70 degrees with the panel (421) or the connecting plate (42); and the side vanes (44) being positioned in an opposite manner with regard to the middle vanes (44), and positioned such that they would face upwards or downwards from the edge of the panel (421) on which they are found and preferably make an angle of 20-70 degrees with the panel (421) or the connecting plate (42).

10. A multi-stage mixer (1) according to claim 7, **characterized by** the connecting plate (42) having the connecting terminals (422) entering into the frame (41), and allowing the cross-flow generator (4) to be fixed onto the flow centralizer (3) by fitting into the channels (34) that are found on the outer frame (31).

11. A multi-stage mixer (1) according to claim 1, **characterized by** a connecting piece (5) connecting the frame (41) of the cross-flow generator (4) and the outer frame (31) to each other.

12. A multi-stage mixer (1) according to claim 1 or claim 7, **characterized by** the cross-flow generator (4) found at the middle part of the flow centralizer (3), and fixed onto the flow centralizer (3) by means of interspaced connecting pieces (5) or the connecting plate (42).

13. A multi-stage mixer (1) according to claim 5, **characterized by** a gap (33) found between the outer frame (31) and the frame (41) and allowing the swirl or reverse swirl flow characteristic (G) flow passing through that area to exit in the same flow characteristic.

14. A multi-stage mixer (1) according to claim 5, **characterized by** the cross-flow generator (4) and the flow centralizer (3) being configured to combine the flow passing between the outer frame (31) and the frame (41) with a swirl or reverse swirl flow characteristic (G) with the exiting cross-flow characteristic (C) flow, and thus configured to provide a complex and non-uniform flow structure (D) comprising both the swirl or reverse swirl flow characteristic (G) and cross-flow characteristic (C) flow.

## Patentansprüche

1. Mehrstufiger Mischer (1) zum Anordnen in einem Fahrzeugauspuffrohr (B), der sich in einem Abgassystem befindet, zum Mischen des Abgas- und Hamstoffstroms (U) in drei Stufen, um denselben in eine ungleichmäßige Strömungsstruktur (D) umzuwandeln, die sowohl wirbelnd als auch instationär mit Drall- oder Gegendrallströmungscharakteristik (G) und Durchflusscharakteristik (C) verläuft und umfassend
- mindestens einen Drallerzeuger (2) mit Drallplatten (21), die so konfiguriert sind, dass sie den Abgas- und Harnstoffstrom (U) in der ersten Stufe vermischen und derart zueinander positioniert sind, dass sie eine kreisförmige Struktur bilden und durch die Drallplatten (21) und seiner kreisförmigen Hohlstruktur Umwandlung der Abgas- und Harnstoffströmung (U) in eine Strömungscharakteristik in Form einer Drall- oder Gegendrallströmungscharakteristik (G) und eine Verlängerung des Strömungsweges durch Rotation ermöglichen;
- mindestens einen Strömungszentrierer (3), der so konfiguriert ist, dass er die zweite Mischstufe durchführt, und während der zweiten Mischstufe derart konfiguriert ist, dass die einströmende Strömung mit Drall- oder Rückwärtsdrallströmungscharakteristiken (G) in Richtung des zentralen Teils des Rohres (B) durch Zentrieren des durch die darauf befindlichen Kanalisierers (32) fließen, wobei der Strömungszentrierer (3) in Strömungsrichtung des Abgases nach dem Drallerzeuger (2) angeordnet ist, um die den Drallerzeuger (2) verlassende Strömung mit einer Drall- oder umgekehrten Drallströmungscharakteristik (G) zu zentrieren und schließlich ein äußerer Rahmen (31) umfasst
- mindestens einen Durchflussgenerator (4), der in dem Strömungszentrierer (3) konzentrisch mit dem Strömungszentrierer (3) befestigt ist, der die Durchführung der dritten Mischstufe bestätigt, umfassend Mittelschaufeln (43), Seitenschaufeln (44) und eine Verbindungsplatte (42), und der derart konfiguriert ist, dass sie die Strömung mit Drall- oder umgekehrten Drallströmungscharakteristiken (G), die auf die mittleren Leitschaufeln (43) und Seitenleitschaufeln (44) treffen, mit unterschiedlichen Abständen und Positionen in Bezug aufeinander auf die Verbindungsplatte (42), gegeneinander gerichtete Richtungen kanalisiert werden und so die Strömung in eine Strömung mit Durchflusscharakteristik (C) umwandeln lassen,
**dadurch gekennzeichnet, dass** der Strömungszentrierer (3) einen Kanalisierer (32), einen Spalt (33) und mindestens einen Kanal (34) umfasst,
- Spalten (33), die sich am vorderen Teil des äußeren Rahmens (31) an dem Abschnitt, an dem das Abgas und der Harnstoff (U) austreten, an den Kanalisierern (32), die von dem anderen Teil des Äußeren Rahmens (31) beginnen und sich zur Mitte des äußeren Rahmens (31) erstrecken, und an beiden Seiten der Kanalisierer (32), die am Rand des Äußeren Rahmens (31) eine schmalere Struktur aufweisen und eine breitere Struktur an den Spitzen der Kanalisierer (32), die näher am Zentrum liegen, sich befinden.

2. Mehrstufiger Mischer (1) nach Anspruch 1, **gekennzeichnet durch** die auf der äußeren konischen Struktur (22) und auf der inneren konischen Struktur (23) sich befindene Drallplatten (21), die auf der äußeren konischen Struktur (22) und auf der inneren konischen Struktur (23) in der gleichen Richtung positioniert sind, um eine kreisförmige Strömung zu bilden.

3. Mehrstufiger Mischer (1) nach Anspruch 1, **gekennzeichnet durch** die auf der äußeren konischen Struktur (22) und auf der inneren konischen Struktur (23) sich befindene Drallplatten (21), die in entgegengesetzter Richtung zueinander umgekehrte Kreisströmungen bilden.

4. Mehrstufiger Mischer (1) nach Anspruch 1, **gekennzichnet durch** die Kanäle (34), die sich am äußeren Rahmen (31) befinden und ermöglichen, dass sich der Durchflussgenerator (4) und der Strömungszentrierer (3) miteinander verbinden, indem sie einen leeren Raum auf dem äußeren Rahmen (31) bilden, wo die Verbindungsplatte (42) und ein Verbindungsstück (5) eingesetzt sind, und die Kanalisierer (32) am Strömungszentrierer (3) Äußeren Rahmen (31) und winkelförmig vom oberen Teil des Äußeren Rahmens (31) zur Mitte hin derart angeordnet sind, dass sie die Strömung über den oberen Teil des Äußeren Rahmens (31) und durch den Äußeren Rahmen (31) und den Rahmen (41) des Durchflussgenerators (4) in Richtung der Mitte kanalisieren können.

5. Mehrstufiger Mischer (1) nach Anspruch 1, **gekennzeichnet durch** den Durchflussgenerator (4), der sich im mindestens einen Rahmen (41), mindestens eine Verbindungsplatte (42), eine mittlere Schaufel (43), einee seitliche Schaufel (44), eine mittlere Schaufelspalt (45) und eine Seitenschaufelspalt (46) umfassenden Strömungszentrierer (3) befindet.

6. Mehrstufiger Mischer (1) nach Anspruch 5, **gekennzeichnet duch** den Durchflussgenerator (4) einen Rahmen (41) aufweist, der sich am äußersten Teil des Durchflussgenerators (4) befindet und eine kreisförmige und hohle Struktur mit einem Durchmesser aufweist, der kleiner ist als der Durchmesser des äußeren Rahmens (31) ist und im äußeren Rahmen (31) montiert ist, und die Verbindungsplatten (42), die mit dem Rahmen (41) verbunden sind, parallel zueinander in bevorzugten Abständen vom untersten Teil zum obersten Teil des Rahmens (41) positioniert sind und sich von einer Innenwand zur anderen Innenwand der Rahmen (41) erstrecken.

7. Mehrstufiger Mischer (1) nach Anspruch 5, **gekennzeichnet durch** eine Verbindungsplatte (42), die mindestens eine Platte (421), die die Verbindungsplatte (42) bildet, indem sie miteinander verbunden oder zusammengefügt wird, in unterschiedlichen Winkeln zueinander zusammenkommt und sicherstellt, dass die Verbindungsplatte (42) sich in dem Rahmen (41) in unterschiedlichen Höhen von einem Ende zum anderen Ende des Rahmens (41) befindet, und mindestens eine Anschlussklemme (422) umfasst.

8. Mehrstufiger Mischer (1) nach Anspruch 7, **gekennzeichnet durch** den Durchflussgenerator (4), der mittlere Leitschaufeln (43) aufweist, die sich im mittleren Teil der Verbindungsplatte (42) in Bezug auf die Mitte des Rahmens (41) befinden, und Seitenleitschaufeln (44), die sich an den Kanten der Verbindungsplatte (42) befinden und die näher am Rahmen (41) sind und beide am Vorderkantenteil der Verbindungsplatte (42) zu finden sind, mit dem Paneel (421) verbunden sind oder eine einstückige Struktur mit dem Paneel (421) aufweisen; und einen Mittelleitschaufelspalt (45), der einen Raum zwischen den Mittelleitschaufeln (43) bildet, durch den das Abgas und der Hamstoff (U) strömen können, und einen Seitenleitschaufelspalt (46), der einen Raum zwischen den Seitenleitschaufeln (44), durch die der Abgas- und Harnstoffstrom (U) passieren kann, bildet.

9. Mehrstufiger Mischer (1) nach Anspruch 7, **gekennzeichnet durch** den Durchflussgenerator (4), der mittlere Leitschaufeln (43) und Seitenleitschaufeln (44) aufweist, die derart konfiguriert sind, dass sie das darauf auftreffende Abgas und Harnstoff (U) in Richtungen entsprechend ihrem eigenen Standwinkel durch ihre entgegengesetzte -und umgekehrte Winkelstellung zueinander kanalisieren, und somit konfiguriert, um der Strömung ein Querströmungsmuster zu verleihen; die mittleren Schaufeln (43) in Bezug auf die Seitenschaufeln (44) entgegengesetzt positioniert sind und derart positioniert sind, dass sie von der Kante der Platte (421), auf der sie sich befinden, nach oben oder unten zeigen und vorzugsweise einen Winkel von 20-70 Grad mit dem Paneel (421) oder der Verbindungsplatte (42) bilden, und die Seitenleitbleche (44) in Bezug auf die Mittelleitbleche (44) entgegengesetzt positioniert sind und derart positioniert sind, dass sie nach oben zeigen oder nach unten von der Kante der Platte (421), auf der sie sich befinden, und vorzugsweise einen Winkel von 20-70 Grad mit der Platte (421) oder der Verbindungsplatte (42) bilden.

10. Mehrstufiger Mischer (1) nach Anspruch 7, **gekennzeichnet durch** die Verbindungsplatte (42), die Anschlussklemmen (422) aufweist, die in den Rahmen (41) münden und die Befestigung des Durchflussgenerators (4) am Strömungszentrierer (3) durch Einpassen in die vorhandenen Kanäle (34) am Äußeren Rahmen (31) ermöglichen.

11. Mehrstufiger Mischer (1) nach Anspruch 1, **gekennzeichnet durch** ein Verbindungsstück (5), das den Rahmen (41) des Durchflussgenerators (4) und den Äußeren Rahmen (31) miteinander verbindet.

12. Mehrstufiger Mischer (1) nach Anspruch 1 oder Anspruch 7, **gekennzeichnet durch** den Durchflussgenerator (4), der sich im Mittelteil des Strömungszentrizers (3) befindet und mittels Zwischenverbindungsstücken (5) oder der Verbindungsplatte (42) am Strömungszentrierer (3) befestigt ist.

13. Mehrstufiger Mischer (1) nach Anspruch 5, **gekennzeichnet durch** einen Spalt (33), der sich zwischen dem äußeren Rahmen (31) und dem Rahmen (41) befindet und es ermöglicht, dass der durch diesen Bereich strömende Wirbel- oder umgekehrte Wirbelströmungsstrom (G) in den gleichen Strömungseigenschaften austritt.

14. Mehrstufiger Mischer (1) nach Anspruch 5, **gekennzeichnet durch** den Durchflussgenerator (4) und den Strömungszentrierer (3), die konfiguriert sind, um die zwischen dem äußeren Rahmen (31) und dem Rahmen (41) strömenden Strömung mit einer Drall- oder Gegendrallströmungscharakteristik (G) mit der austretenden Durchflusscharakteristik (C) zu kombinieren, und somit konfiguriert, um eine komplexe und ungleichmäßige Strömungsstruktur (D) bereitzustellen, die sowohl die Drall- oder Gegendrallströmungscharakteristik (G) als auch die Durchflusscharakteristik (C) umfasst.

## Revendications

1. Mélangeur à plusieurs étages (1) destiné à être placé à l'intérieur d'un tuyau d'échappement de véhicule (B) se trouvant dans un système d'échappement pour mélanger l'écoulement d'échappement et d'urée (U) en trois étages de manière à convertir celui-ci en une structure d'écoulement non uniforme (D) qui se déroule à la fois de manière tourbillonnante et instable avec une caractéristique d'écoulement tourbillonnaire ou tourbillonnaire inverse (G) et une caractéristique d'écoulement transversal (C) ; et comprenant
- au moins un générateur de tourbillon (2) comprenant des plaques à tourbillon (21) configurées pour mélanger l'écoulement de gaz d'échappement et d'urée (U) dans le premier étage et positionnées les unes par rapport aux autres de telle sorte qu'elles formeraient une structure circulaire, et assurant, au moyen des plaques à tourbillon (21) et de sa structure creuse circulaire, la conversion d' écoulement de gaz d'échappement et d'urée (U) en une caractéristique d'écoulement sous la forme d'une caractéristique d'écoulement tourbillonnaire ou tourbillonnaire inverse (G) et permettant l'extension du trajet d'écoulement par rotation.
- au moins un centralisateur d'écoulement (3) configuré pour effectuer la seconde étape de mélange, et pendant la seconde étape de mélange, configuré pour canaliser l'écoulement entrant avec une caractéristique d'écoulement tourbillonnaire ou tourbillonnaire inverse (G) vers la partie centrale du tuyau (B) en centrant l'écoulement au moyen des canalisateurs (32) trouvés sur celui-ci, le centralisateur d'écoulement (3) situé dans la direction d'écoulement des gaz d'échappement, après le générateur de tourbillon (2), configuré pour centrer l'écoulement quittant le générateur de tourbillon (2) avec une caractéristique d'écoulement tourbillonnaire ou tourbillonnaire inverse (G), et comprenant au moins un cadre extérieur (31),
- au moins un générateur d'écoulement transversal (4) fixé dans le centralisateur d'écoulement (3) de manière concentrique avec le centralisateur d'écoulement (3), configuré pour réaliser la troisième étape de mélange, comprenant des aubes centrales (43), des aubes latérales (44), et une plaque de connexion (42), et configuré pour canaliser l'écoulement avec une caractéristique d'écoulement tourbillonnaire ou tourbillonnaire inverse (G) frappant sur les aubes centrales (43) et les aubes latérales (44), trouvées à différentes distances et positions les unes par rapport aux autres sur la plaque de connexion (42), vers des directions opposées les unes aux autres et convertissant ainsi l'écoulement en un écoulement avec une caractéristique d'écoulement transversal (C),
**caractérisé en ce que** le centralisateur d'écoulement (3) comprend
- un canalisateur (32) ; un espace (33), et au moins un canal (34).
- des espaces (33) situés au niveau de la partie avant du cadre extérieur (31), au niveau de la section où les gaz d'échappement et l'urée (U) sortent, au niveau des canalisateurs (32) qui partent de la partie de bord du cadre extérieur (31) et s'étendent vers le centre du cadre extérieur (31) et au niveau des deux côtés des canalisateurs (32), et qui ont une structure plus étroite au niveau du bord du cadre extérieur (31) et une structure plus large au niveau des extrémités des canalisateurs (32) qui sont plus proches du centre.

2. Mélangeur à plusieurs étages (1) selon la revendication 1, **caractérisé par** des plaques à tourbillon (21) se trouvant sur la structure conique extérieur (22) et la structure conique intérieure (23), positionnées sur la structure conique extérieur (22) et la structure conique intérieure (23) dans la même direction pour former un écoulement circulaire.

3. Mélangeur à plusieurs étages (1) selon la revendication 1, **caractérisé par** des plaques à tourbillon (21) positionnées sur la structure conique extérieure (22) et la structure conique intérieure (23) dans des directions opposées l'une à l'autre pour former des écoulements circulaires inversés.

4. Mélangeur à plusieurs étages (1) selon la revendication 1, **caractérisé par** des canaux (34) se trouvant sur le cadre extérieur (31) et permettant au générateur d'écoulement transversal (4) et au centralisateur d'écoulement (3) de se connecter l'un à l'autre en formant un espace vide sur le cadre extérieur (31) où la plaque de connexion (42) et une pièce de connexion (5) doivent être insérées, et des canalisateurs (32) trouvés sur le cadre extérieur (31) du centralisateur d'écoulement (3) et positionnés de manière angulaire à partir de la partie supérieure du cadre extérieur (31) vers le centre de sorte qu'ils canalisent l'écoulement passant sur la partie supérieure du cadre extérieur (31) et à travers le cadre extérieur (31) et le cadre (41) du générateur d'écoulement transversal (4) vers le centre.

5. Mélangeur à plusieurs étages (1) selon la revendication 1, **caractérisé par** le générateur d'écoulement transversal (4) trouvé dans le centralisateur d'écoulement (3) comprenant au moins un cadre (41), au moins une plaque de connexion (42), une aube centrale (43), une aube latérale (44), un espace d'aube centrale (45) et un espace d'aube latérale (46).

6. Mélangeur à plusieurs étages (1) selon la revendication 5, **caractérisé par** le générateur d'écoulement transversal (4) ayant un cadre (41) trouvé à la partie la plus extérieur du générateur d'écoulement transversal (4), ayant une structure circulaire et creuse avec un diamètre qui est plus petit que le diamètre du cadre extérieur (31), et monté dans le cadre extérieur (31) ; et des plaques de connexion (42) connectées au cadre (41), positionnées parallèlement les unes aux autres à des intervalles préférés de la partie la plus basse à la partie la plus haute du cadre (41), et s'étendant d'une paroi interne à l'autre paroi interne du cadre (41).

7. Mélangeur à plusieurs étages (1) selon la revendication 5, **caractérisé par** une plaque de connexion (42) comprenant au moins un panneau (421) formant la plaque de connexion (42) en étant connecté l'un à l'autre ou en s'assemblant, s'assemblant à différents angles l'un par rapport à l'autre et assurant que la plaque de connexion (42) se trouve dans le cadre (41) à différentes hauteurs s'étendant d'une extrémité à l'autre du cadre (41), et au moins une borne de connexion (422).

8. Mélangeur à plusieurs étages (1) selon la revendication 7, **caractérisé par** le générateur d'écoulement transversal (4) ayant des aubes centrales (43) situées au niveau de la partie centrale de la plaque de connexion (42) par rapport au centre du cadre (41), et des aubes latérales (44) situées au niveau des bords de la plaque de connexion (42) qui sont plus proches du cadre (41), et toutes deux situées au niveau de la partie de bord avant de la plaque de connexion (42), connectées au panneau (421) ou ayant une structure en une seule pièce avec le panneau (421) ; et un espace de l'aube centrale (45) formant un espace entre les aubes centrales (43) à travers lequel l'écoulement de gaz d'échappement et d'urée (U) peuvent passer, et un espace de l'aube latérale (46) formant un espace entre les aubes latérales (44) à travers lequel l'écoulement de gaz d'échappement et d'urée (U) peuvent passer.

9. Mélangeur à plusieurs étages (1) selon la revendication 7, **caractérisé par** le générateur d'écoulement transversal (4) ayant des aubes centrales (43) et des aubes latérales (44) configurées pour canaliser les gaz d'échappement et l'urée (U) frappant sur celles-ci dans des directions selon leur propre angle d'inclinaison au moyen de leurs positions à angle opposé et de réserve les unes par rapport aux autres, et ainsi configurées pour fournir un modèle d'écoulement transversal à l'écoulement ; les aubes centrales (43) étant positionnées de manière opposée par rapport aux aubes latérales (44), et positionnées de telle sorte qu'elles soient orientées vers le haut ou vers le bas à partir du bord du panneau (421) sur lequel elles se trouvent et forment de préférence un angle de 20-70 degrés avec le panneau (421) ou la plaque de connexion (42) ; et les aubes latérales (44) étant positionnées de manière opposée par rapport aux aubes centrales (44), et positionnées de telle sorte qu'elles soient orientées vers le haut ou vers le bas à partir du bord du panneau (421) sur lequel elles se trouvent et forment de préférence un angle de 20-70 degrés avec le panneau (421) ou la plaque de connexion (42).

10. Mélangeur à plusieurs étages (1) selon la revendication 7, **caractérisé par** la plaque de connexion (42) ayant les bornes de connexion (422) entrant dans le cadre (41), et permettant de fixer le générateur d'écoulement transversal (4) sur le centralisateur d'écoulement (3) en s'emboîtant dans les canaux (34) qui se trouvent sur le cadre extérieur (31).

11. Mélangeur à plusieurs étages (1) selon la revendication 1, **caractérisé par** une pièce de connexion (5) reliant le cadre (41) du générateur d'écoulement transversal (4) et le cadre extérieur (31) l'un à l'autre.

12. Mélangeur à plusieurs étages (1) selon la revendication 1 ou revendication 7, **caractérisé par** le générateur d'écoulement transversal (4) se trouvant à la partie médiane du centralisateur d'écoulement (3), et fixé sur le centralisateur d'écoulement (3) au moyen de pièces de connexion (5) espacées ou de la plaque de connexion (42).

13. Mélangeur à plusieurs étages (1) selon la revendication 5, **caractérisé par** un espace (33) trouvé entre le cadre extérieur (31) et le cadre (41) et permettant à l'écoulement caractéristique d'écoulement tourbillonnaire ou tourbillonnaire inverse (G) traversant cette zone de sortir dans la même caractéristique d'écoulement.

14. Mélangeur à plusieurs étages (1) selon la revendication 5, **caractérisé par** le générateur d'écoulement transversal (4) et le centralisateur d'écoulement (3) étant configurés pour combiner l'écoulement passant entre le cadre extérieur (31) et le cadre (41) avec un caractéristique d'écoulement tourbillonnaire ou tourbillonnaire inverse (G) avec l'écoulement caractéristique d'écoulement transversal (C) sortant, et configuré ainsi pour fournir une structure d'écoulement complexe et non uniforme (D) comprenant à la fois la caractéristique d'écoulement tourbillonnaire ou tourbillonnaire inverse (G) et l'écoulement caractéristique d'écoulement transversal (C).
